# FASCICULE DE BREVET EUROPEEN

(11) **EP 0 391 819 B1**
(45) Date de publication et mention de la délivrance du brevet: **19.05.1993**
(21) Numéro de dépôt: 90440007.4
(22) Date de dépôt: 31.01.1990
(51) Int. Cl.: B23K 37/00, F25D 17/02

(54) **Dispositif pour le refroidissement d'un appareil, notamment d'une torche de soudage, au moyen d'un liquide en dépression**
Vorrichtung zur Kühlung eines Apparates, insbesondere eines Schweissbrenners, mittels einer unter Unterdruck stehenden Flüssigkeit
Apparatus for cooling a device, in particular a welding torch, by means of a liquid under low pressure

(30) Priorité: 13.02.1989 FR 8902009
(43) Date de publication de la demande: 10.10.1990
(73) Titulaire: PROTEM, 26800 Etoile (FR)
(72) Inventeur: Emilian, Bernard, F-26250 Livron (FR)
(74) Mandataire: Arbousse-Bastide, Jean-Claude Philippe

(56) Documents cités:
- EP-A- 0 076 081
- FR-A- 563 657
- FR-A- 2 481 171
- FR-A- 2 508 617
- US-A- 2 744 392
- US-A- 2 995 647

## Description

La présente invention a pour objet un dispositif permettant le refroidissement d'un appareil tel qu'une torche de soudage au moyen d'un liquide en dépression.

On sait que la mise en oeuvre des torches de soudage nécessite leur refroidissement permanent en cours d'opération, au moyen d'un liquide sous pression qui est le plus souvent de l'eau. Ce liquide est prélevé dans un réservoir au moyen d'une pompe qui l'envoie sous pression dans la torche de soudage, au sortir de laquelle il est généralement refroidi avant d'être renvoyé dans le réservoir.

Un tel dispositif connu par exemple de FR-A1- 2 481 171, présente l'inconvénient de faire courir à ses utilisateurs le risque de fuites dues à de mauvais raccordements des tuyaux ou à des perforations accidentelles de ces derniers et qui, en raison de la pression du liquide, peuvent être rapidement importantes.

Or l'évolution des techniques entraîne de plus en plus fréquemment la nécessité de réaliser des soudures en milieu strictement anhydre, en particulier dans les centrales nucléaires.

La mise en oeuvre des dispositifs de soudage connus à ce jour nécessite dans ce cas des précautions importantes, qui n'écartent toutefois pas le risque d'une fuite accidentelle.

D'autres appareils doivent également être parfois mis en fonctionnement en milieu strictement anhydre, en nécessitant un refroidissement continu au moyen d'un liquide, comme par exemple les caméras de visualisation des bains de soudage.

La présente invention a pour but de remédier aux inconvénients inhérents aux dispositifs connus en proposant un dispositif de refroidissement qui offre l'avantage majeur de ne présenter aucun risque de fuite.

La présente invention a ainsi pour objet un dispositif qui permet le refroidissement d'un appareil au moyen d'un liquide en dépression provenant d'un réservoir, ce dispositif comportant en combinaison :
a) un circuit primaire de circulation du liquide sous pression, comportant une pompe le prélevant dans le réservoir et un venturi le recevant sous pression et le renvoyant dans ledit réservoir :
b) au moins un circuit secondaire de circulation du liquide en dépression, par aspiration dans le réservoir au moyen du venturi, ce circuit secondaire comportant entre le réservoir et le venturi l'appareil à refroidir, et un radiateur assurant le refroidissement du liquide lequel est renvoyé dans le réservoir par le venturi.

Du fait de la dépression existant dans ce circuit secondaire, le refroidissement de l'appareil s'effectue sans risque de fuites, une perforation dans un tuyau ne pouvant entraîner qu'une aspiration de l'air ambiant dans ledit tuyau et en aucun cas donner lieu au moindre écoulement de liquide.

Outre cet avantage, la constitution du dispositif selon l'invention présente celui d'empêcher les surpressions toujours à craindre lors de l'arrêt des dispositifs connus, ceci grâce à la présence du venturi qui assure la mise en dépression du liquide dans le circuit secondaire.

Le dispositif selon l'invention permet par ailleurs la mise en oeuvre de plusieurs circuits secondaires en parallèle, autorisant le fonctionnement simultané de plusieurs appareils, et ce sans qu'il soit nécessaire de faire appel à des pompes particulièrement puissantes, les pompes couramment utilisées dans les dispositifs connus convenant tout à fait à sa réalisation en assurant un débit suffisant du liquide dans l'appareil.

La présente invention sera mieux comprise à la lecture de la description qui suit et qui se réfère au dessin annexé, étant bien entendu que cette description ne présente aucun caractère limitatif vis-à-vis de l'invention.

Dans le dessin annexé :
- la figure 1 représente une vue schématique d'un premier mode de réalisation d'un dispositif selon l'invention ;
- la figure 2 représente une vue schématique d'un second mode de réalisation du dispositif selon l'invention.

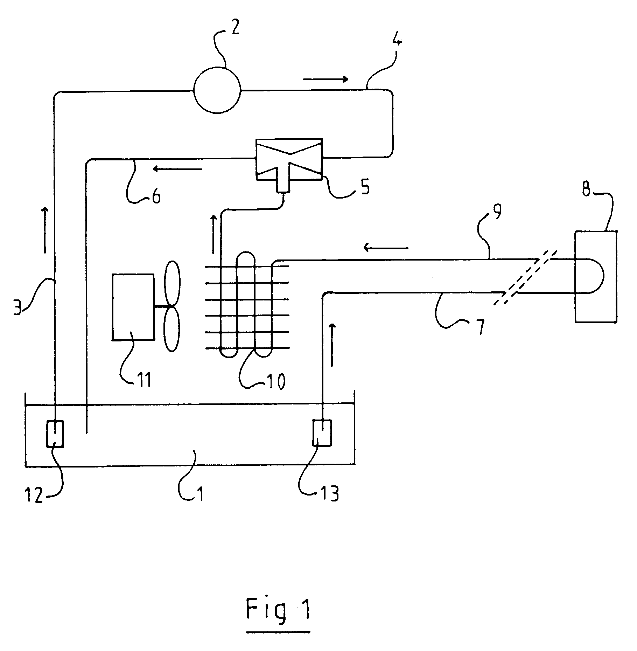

Si on se réfère à ces figures, et d'abord à la figure 1, on voit que le dispositif représenté comprend un réservoir 1 contenant le liquide de refroidissement, qui est acheminé, via une canalisation 3, à une pompe 2 qui l'envoie sous pression, via une canalisation 4, à un venturi 5 qui le renvoie, via une canalisation 6, au réservoir 1.

La dépression créée dans le venturi 5 aspire le liquide du réservoir 1 dans une canalisation 7 qui l'achemine, en dépression, à l'appareil 8 à refroidir, d'où il est ensuite acheminé, via une canalisation 9, vers un radiateur 10 refroidi par un ventilateur 11, puis vers le venturi 5 d'où la pompe 2 le refoule vers le réservoir 1 par la canalisation 6.

Les canalisations 3 et 7 de départ du réservoir 1 comportent chacune un filtre 12, respectivement 13, pour éliminer les impuretés qui peuvent se trouver en suspension dans le liquide.

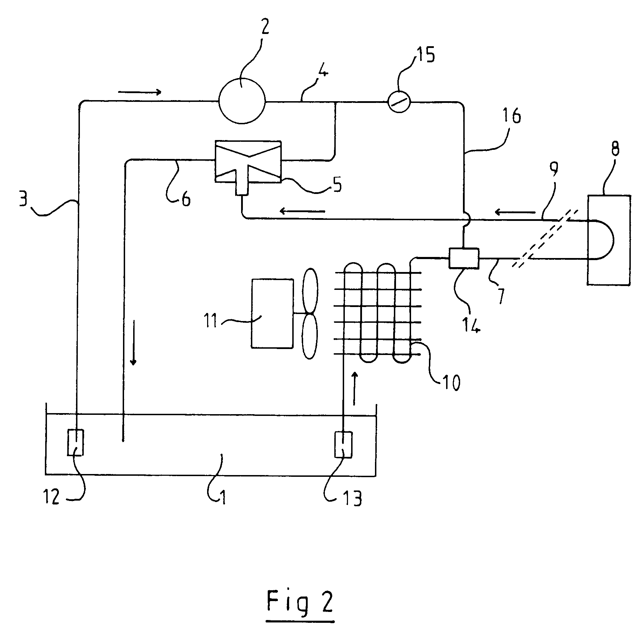

Si on se réfère maintenant à la figure 2, on voit que le dispositif représenté comporte les mêmes éléments que celui de la figure 1, à savoir un réservoir 1, une pompe 2, un venturi 5, l'appareil 8 à refroidir et un radiateur 10 refroidi par un ventilateur 11, toutefois dans ce mode de réalisation le radiateur 10 se trouve sur la canalisation 7, au sortir du réservoir 1.

Dans ce cas, le liquide réchauffé sortant de l'appareil 8 est renvoyé au réservoir 1 par le venturi 5, et c'est au sortir du réservoir 1 qu'il est refroidi par le radiateur 10 avant d'être envoyé à l'appareil 8 par la canalisation 7.

Dans ce mode de réalisation, le dispositif est complété par un injecteur de mise en eau 14 disposé sur la canalisation 7, entre le radiateur 10 et l'appareil 8, et relié par une canalisation 16 à une vanne 15 qui permet de l'alimenter en liquide en même temps que la pompe 2 lors d'une remise en marche après un arrêt temporaire.

La vanne 15 associée à l'injecteur 14 permet d'amorcer instantanément la pompe 2 et de remplir rapidement le circuit secondaire, permettant d'éviter la formation de bulles d'air dans le circuit en dépression et d'éviter en outre que l'appareil 8 fonctionne sans refroidissement momentané.

Ainsi qu'il a déjà été dit, le circuit secondaire en dépression du dispositif selon l'invention peut être mis en parallèle avec au moins un autre circuit secondaire, cette mise en parallèle s'effectuant au sortir de la pompe et permettant le fonctionnement simultané de plusieurs appareils.

Les avantages déjà énoncés du dispositif selon l'invention permettent, ainsi qu'il a été dit, de l'utiliser sans aucun risque de fuite dans les milieux strictement anhydres, tels que ceux existant en particulier dans les centrales nucléaires.

Le liquide mis en oeuvre dans le dispositif selon l'invention peut être l'eau mais aussi n'importe quel autre liquide approprié au refroidissement de l'appareil utilisé, comme par exemple le sodium liquide.

Le dispositif selon l'invention peut être avantageusement complété par des appareils permettant le contrôle et la régulation de la pression, de la température et du débit du liquide, tous ces paramètres pouvant faire l'objet d'une régulation automatique gérée par exemple par ordinateur.

Il convient de noter en outre que les applications du dispositif selon l'invention peuvent être étendues au refroidissement de tout appareil susceptible d'être mis en fonctionnement dans un milieu strictement anhydre, tel qu'une torche de soudage ou une caméra de visualisation d'un bain de soudage dans une ambiance n'autorisant pas la présence d'eau.

Par ailleurs, il est évident que le dispositif selon l'invention peut être également mis en oeuvre pour le réchauffement d'un appareil, le radiateur étant alors utilisé comme réchauffeur au lieu de l'être comme refroidisseur.

## Revendications

1. Dispositif pour le refroidissement d'un appareil (8), notamment d'une torche de soudage, au moyen d'un liquide en dépression permettant d'écarter tout risque de fuite, comprenant en combinaison :
a) un circuit primaire de circulation du liquide sous pression, comportant une pompe (2) le prélevant dans un réservoir (1) et l'y renvoyant à travers un venturi (5) ;
b) un circuit secondaire de circulation du liquide en dépression, par aspiration dans le réservoir (1) au moyen du venturi (5), ce circuit secondaire comportant entre le réservoir (1) et le venturi (5) l'appareil (8) à refroidir, et comportant en outre un radiateur (10) pour le refroidissement du liquide provenant de l'appareil (8), le liquide étant renvoyé dans le réservoir (1) par le venturi (5).

2. Dispositif selon la revendication 1, caractérisé en ce que le radiateur (10) est disposé sur la canalisation (9) qui relie l'appareil (8) au venturi (5), de manière à refroidir dès sa sortie le liquide sortant de l'appareil (8).

3. Dispositif selon la revendication 1, caractérisé en ce que le radiateur (10) est disposé sur la canalisation (7) qui relie le réservoir (1) à l'appareil (8), de manière à refroidir le liquide sortant de l'appareil (8) après son retour au réservoir (1).

4. Dispositif selon la revendication 1, caractérisé en ce qu'il comporte en outre un dispositif de mise en eau constitué d'un injecteur (14) disposé sur la canalisation (7) reliant le réservoir (1) à l'appareil (8) et relié par une canalisation (16) à une vanne (15) qui permet de l'alimenter en liquide en même temps que la pompe (2) lors d'une remise en marche de l'appareil (8) après un arrêt temporaire.

5. Dispositif selon l'une quelconque des revendications précédentes, caractérisé en ce qu'il est mis en oeuvre pour le réchauffement d'un appareil, le radiateur (10) étant utilisé comme réchauffeur.

## Claims

1. Mechanism for cooling an appliance such as a welding torch by means of liquid under pressure while avoiding all risk of leakage, comprising in combination:
a. a primary circulation circuit for the liquid under pressure, comprising a pump (2) for discharging a liquid under pressure from a reservoir (1) across a venturi-tube 5;
b. a secondary circulation circuit for the liquid under pressure, by suction in the reservoir (1) by means of the venturi (5), this secondary circuit comprising between the reservoir (1) and the venturi (5), the appliance (8) to be cooled and a radiator (10) for cooling the liquid originating from the appliance (8), the liquid being discharged into the reservoir (1) through the venturi (5).

2. Mechanism according to claim 1, characterised in that the radiator (10) is disposed in the channelling (9) which connects the apparatus (8) to the venturi (5) so as to chill the liquid leaving the appliance (8).

3. Mechanism according to claim 1 characterised in that the radiator (10) is disposed in the channelling (7) which links the reservoir (1) to the appliance (8) so as to chill the liquid exiting the apparatus (8) after its return to the reservoir (1).

4. Mechanism according to claim 1 characterised in that it further includes a liquid circulation device constituted by an injector (14) disposed in the channelling (7) linking the reservoir (1) to the appliance (8) and itself linked by a channelling (16) to a butterfly valve (15) which permits liquid feed at the same time as the pump (2) at the time of a reduction in the working of the appliance (8) after a temporary stop.

5. Mechanism according to any of the preceding claims, characterised in that it is operable to cause reheating of an appliance, the radiator (10) being utilised as a reheater.

## Patentansprüche

1. Vorrichtung zur Kühlung eines Apparates (8), insbesondere eines Schweißbrenners, mittels einer unter Saugdruck stehenden Flüssigkeit zur vollständigen Vermeidung jedes Auslaufrisikos, welche in Kombination umfaßt:
(a) einen Primärkreislauf einer unter Druck stehenden Flüssigkeit mit einer Pumpe (2), welche die Flüssigkeit aus einem Reservoir (1) ansaugt und über ein Venturirohr (5) zu diesem zurückführt;
(b) einen Sekundärkreislauf einer unter einem Saugdruck stehenden Flüssigkeit, welche mithilfe des Venturirohrs (5) aus dem Reservoir (1) angesaugt wird, wobei dieser Sekundärkreislauf zwischen dem Reservoir (1) und dem Venturirohr (5) den zu kühlenden Apparat (8) enthält sowie einen Radiator (10) zur Kühlung der von dem Apparat (8) kommenden Flüssigkeit und diese Flüssigkeit über das Venturirohr (5) zum Reservoir (1) zurückgeführt wird.

2. Vorrichtung nach Anspruch 1, **dadurch gekennzeichnet**, daß der Radiator (10) in der Rohrleitung (9) angeordnet ist, welche den Apparat (8) mit dem Venturirohr (5) verbindet, wodurch die unmittelbar aus dem Apparat (8) austretende Flüssigkeit gekühlt wird.

3. Vorrichtung nach Anspruch 1, **dadurch gekennzeichnet**, daß der Radiator (10) in der Rohrleitung (7) angeordnet ist, welche das Reservoir (1) mit dem Apparat (8) verbindet, wodurch die aus dem Apparat (8) austretende Flüssigkeit nach ihrem Rücklauf zum Reservoir (1) gekühlt wird.

4. Vorrichtung nach Anspruch 1, **dadurch gekennzeichnet**, daß sie eine Wässerungsvorrichtung umfaßt, die aus einem Injektor (14) besteht, welcher in der das Reservoir (1) mit dem Apparat (8) verbindenden Rohrleitung (7) angeordnet ist und über eine Rohrleitung (16) mit einem Schieber (15) verbunden ist, durch welchen der Rohrleitung (16) gleichzeitig mit der Pumpe (2) Flüssigkeit zuführbar ist anläßlich einer Wiederinbetriebnahme des Apparats (8) nach einer Zwischenabschaltung.

5. Vorrichtung nach einem der voranstehenden Ansprüche, **dadurch gekennzeichnet**, daß sie zur Heizung eines Apparats eingesetzt wird, wobei der Radiator (10) als Heizer verwendet wird.
